# EUROPÄISCHE PATENTANMELDUNG

(11) **EP 1 452 999 A2**
(43) Veröffentlichungstag der Anmeldung: **01.09.2004**
(21) Anmeldenummer: 04000819.5
(22) Anmeldetag: 16.01.2004
(51) Int. Cl.: G06K 19/077

(54) **Verfahren und Vorrichtung zur kontinuierlichen Herstellung elektrischer und/oder elektronischer Folienbauteile**

(30) Priorität: 28.02.2003 DE 10309990
(71) Anmelder: bielomatik Leuze GmbH + Co KG, 72639 Neuffen (DE)
(72) Erfinder: Bohn, Martin, 72762 Reutlingen (DE)
(74) Vertreter: Patentanwälte Ruff, Wilhelm, Beier, Dauster & Partner

(57) **Zusammenfassung**

1. Ein Verfahren und Vorrichtung zur kontinuierlichen Herstellung elektrischer und/oder elektronischer Folienbauteile.
2.1 Ein Verfahren zur kontinuierlichen Herstellung elektrischer und/oder elektronischer Folienbauteile, die in wenigstens einer Reihe hintereinander auf wenigstens einer endlosen Folienbahn aufgebaut werden, ist bekannt.
2.2 Erfindungsgemäß ist vorgesehen, dass auf der wenigstens einen Folienbahn in mehreren Verfahrensabschnitten elektrische Anschlußflächen und aktive sowie inaktive Schichten zur Bildung von elektrochemisch wirksamen Energieversorgungseinheiten aufgebaut werden.
2.3 Einsatz für die Herstellung aktiver Transponder.

## Beschreibung

Die Erfindung betrifft ein Verfahren zur kontinuierlichen Herstellung elektrischer und/oder elektronischer Folienbauteile, die in wenigstens einer Reihe hintereinander auf wenigstens einer endlosen Folienbahn aufgebaut werden, sowie eine Vorrichtung zur kontinuierlichen Herstellung derartiger Folienbauteile mit wenigstens einer Abrolleinrichtung zum Aufnehmen und Abwickeln einer flexiblen Folienbahn.

Aus der DE 101 36 502 A1 ist ein Verfahren und eine Vorrichtung zur kontinuierlichen Herstellung mehrerer elektromagnetisch wirksamer Identifikationsmittel bekannt. Die Identifikationsmittel sind als Transponder mit integriertem Chipbauteil gestaltet, wobei die Transponder passive Elemente ohne eigene Energieversorgung sind. Die Identifikationsmittel sind in Bandform hintereinander auf einer Endlosrolle angeordnet und werden beim Abziehen von der Endlosrolle durch Stanzen vereinzelt und auf eine Klebstoffschicht einer Folienlagenbahn aufgebracht.

Die Folienlagenbahn wird mit Sollknick- oder Sollkrümmungsstellen versehen, um die entsprechende Folienlage, auf der das Identifikationsmittel aufgebracht ist, derart zu falten und zu krümmen, dass das Identifikationsmittel zu einer elektromagnetisch aktivierbaren Oberfläche, auf der das Identifikationsmittel befestigt ist, beabstandet bleibt.

Elektrische und/oder elektronische Folienbauteile, insbesondere Identifikationsmittel in Form von Transpondern, sind als aktive oder als passive Elemente bekannt. Passive Elemente kommen ohne eigene Energieversorgung aus. Aktive Elemente hingegen weisen eine entsprechende Energieversorgungseinheit auf.

Es sind Folienbauteile bekannt, die als sog. Papierbatterien ausgeführt sind. Eine derartige Papierbatterie ist in der EP 1 009 476 A1 offenbart. Durch das in der EP 1 009 476 A1 beschriebene Produkt wird eine äußerst flache und in gewissen Grenzen flexible Energieversorgungseinheit geschaffen. Die verschiedenen Lagen der Batterie werden durch geeignete Drucktechniken hergestellt.

Aufgabe der Erfindung ist es, ein Verfahren und eine Vorrichtung der eingangs genannten Art zu schaffen, die eine kostengünstige und einfache Herstellung dieser Folienbauteile in großen Mengen ermöglicht.

Diese Aufgabe wird für das Verfahren dadurch gelöst, dass auf der wenigstens einen Folienbahn in mehreren Verfahrensabschnitten elektrische Anschlussflächen und aktive sowie inaktive Schichten zur Bildung von elektrochemisch wirksamen Energieversorgungseinheiten aufgebaut werden. Dadurch ist es möglich, äußerst wirtschaftlich entsprechende Folienbauteile, insbesondere Folien oder Papierbatterien, oder mit derartigen Energieversorgungseinheiten versehene elektrische und/oder elektronische Elemente, in großen Stückzahlen herzustellen. Die wenigstens eine Folienbahn wird kontinuierlich gefördert. Dabei werden schrittweise die entsprechenden Schichten oder Lagen für die elektrochemisch wirksame Energieversorgungseinheit aufgebaut, sodass die auf der wenigstens einen Folienbahn aufgebauten Endprodukte im Bahnverlauf der Folienbahn entstehen. Es sind somit entweder entsprechende Energieversogungseinheiten für sich, die später als Papier- oder Folienbatterien dienen können, als Massenprodukte herstellbar, oder auch komplexe Folienbauteile, bei denen den Energieversorgungseinheiten noch elektrische oder elektronische Verbraucher zugeordnet sind, die aktive Produkte, d. h. aktive Folienbauteile, bilden. Die erfindungsgemäße Lösung eignet sich insbesondere für mit entsprechenden Energieversorgungseinheiten versehene Chipbauteile, die Sensorfunktionen und entsprechende Daten- oder Signalspeicherfunktionen aufweisen. Derartige Chipbauteile können insbesondere auch programmierbar sein. Das elektronische Chipbauteil umfasst somit vorzugsweise neben einem Sensor einen elektronischen Speicher sowie einen Prozessor. Durch die erfindungsgemäße Lösung sind die Folienbauteile aneinandergereiht endlos in Bahnform herstellbar. Die Folienbauteile weisen eine hohe Flexibilität auf, sodass sie äußerst vielseitige Einsatzzwecke besitzen. Die wesentliche erfindungsgemäße Idee ist es, bei kontinuierlicher Förderung und kontinuierlichem Verlauf der wenigstens einen Folienbahn die entsprechenden Schichten in geeigneter Weise aufzubringen, sodass sich als Endprodukt eine Verbundbahn aus einer Vielzahl von aneinandergereihten, elektrischen und/oder elektronischen Folienbauteilen, insbesondere eine Vielzahl von aneinandergereihten Energieversorgungseinheiten, ergibt. Dadurch, dass auch entsprechend elektrische Anschlussflächen bereits vorgesehen werden, sind die Energieversorgungseinheiten nach entsprechender Vereinzelung aus dem Verbundbahnprodukt direkt einsetzbar.

Die erfindungsgemäße Lösung eignet sich insbesondere für den Einsatz von Wegwerfelektronik auf einer Vielzahl von Einsatzgebieten einschließlich Einsatzgebieten des täglichen Lebens, der Technik oder ähnlichem.

In Ausgestaltung der Erfindung wird jede Energieversorgungseinheit mit einem elektrischen oder elektronischen Verbraucher verbunden. Als Verbraucher sind insbesondere elektronische Chipbauteile vorgesehen, die Sensor-, Speicher- und Prozessorfunktion aufweisen. Vorzugsweise muss der entsprechende elektrische oder elektronische Verbraucher so flach gestaltet sein, dass die folien- oder laschenartige, flexible Gestaltung der Folienbauteile nicht verloren geht.

In weiterer Ausgestaltung der Erfindung weisen unterschiedliche Pollagen der Energieversorgungseinheiten getrennte Folienbahnen auf, die als Träger- und Decklagen nach dem Aufbringen der aktiven und inaktiven Schichten zur Bildung von elektrochemisch wirksamen Energieversorgungseinheiten zusammengeführt und kontinuierlich miteinander verbunden werden. Das Aufbringen der Decklage als oberste Schichtlage schafft in Verbindung mit der unteren Trägerlage die elektrochemische Aktivierbarkeit, da Anoden- und Kathodenschicht in Wirkverbindung treten müssen, um eine gewünschte Funktion zu erreichen.

In weiterer Ausgestaltung der Erfindung wird jeder Pollage pro Folienbauteil wenigstens eine Elektrolytschicht zugeordnet, wobei zwischen die Elektrolytschichten beider Pollagen eine Membrantrennlage eingefügt wird. Auch die Membrantrennlage wird kontinuierlich zugeführt und als Schicht auf die Trägerlage bzw. die entsprechend bereits aufgebauten Schichten aufgebracht. Die Membrantrennlage bildet vorzugsweise eine semipermeable Membran, wie sie für Papierbatterien zum Einsatz kommt.

In weiterer Ausgestaltung der Erfindung werden die Elektrolytschichten jeder Energieversorgungseinheit als Gelraupen aufgebracht. Das Elektrolytgel wird somit streifenartig auf die entsprechend darunter liegende Schicht für jede Energieversorgungseinheit aufgebracht.

In weiterer Ausgestaltung der Erfindung werden elektrische Anschlussflächen der Träger- und Decklagen mechanisch miteinander verbunden. Die elektrischen Anschlussflächen der Trägerlage und der Decklage jedes Folienbauteiles sind zueinander beabstandet, da zwischen Trägerlage und Decklage verschiedene aktive oder inaktive Schichten der Energieversorgungseinheit positioniert sind. Durch die mechanische Verbindung wird die benötigte elektrische Leitfähigkeit zwischen den Anschlussflächen von Träger- und Decklage hergestellt.

Vorteilhaft erfolgt eine mechanische Verklammerung der insbesondere metallischen Anschlussflächen von Deck- und Trägerlage. Eine bevorzugte Lösung sieht Crimpen als mechanische Verbindung vor.

Alternativ zu einer mechanischen Verbindung ist auch eine stoffschlüssige Verbindung, insbesondere mit Hilfe einer Laserdurchstrahlschweißung, möglich.

Die elektrischen Anschlussflächen sind insbesondere durch Kupferanschlüsse gebildet, die in geeigneter Weise aus einer Kupferschicht herausgeätzt sind, die vorzugsweise auf der entsprechenden Folienbahn, das heißt auf der Decklage und der Trägerlage, aufgebracht ist.

In weiterer Ausgestaltung der Erfindung werden die hintereinander auf der Folienbahn aufgebauten Folienbauteile vereinzelt und gestapelt. Alternativ wird die mit den fertig aufgebauten Folienbauteilen versehene Verbundbahn aus Träger- und Decklagen zu einer Rolle aufgewickelt. Es ergibt sich somit ein kontinuierliches Rolle/Rolle-Verfahren, indem die Herstellung und der Aufbau der Folienbauteile während des kontinuierlichen Abrollens der entsprechenden Folienbahnen erfolgt und anschließend die miteinander verbundenen Folienbahnen zu einer Endproduktrolle aufgerollt werden.

In weiterer Ausgestaltung der Erfindung wird die mit den fertig aufgebauten Folienbauteilen versehene Verbundbahn zwischen benachbarten Folienbauteilen jeweils gefalzt und leporelloartig abgelegt. Durch alle drei Alternativen ist jeweils eine kompakte Lagerung und Bevorratung der Folienbauteile möglich.

In weiterer Ausgestaltung der Erfindung wird die Folienbahn jeder Pollage mit elektrisch aktiven Schichten versehen, anschließend wird eine Schablonenbahn mit jeder Folienbahn verbunden, die die Folienbahn bis auf die für den Aufbau der elektrochemisch wirksamen Energieversorgungseinheiten maßgeblichen Flächenbereiche abdeckt. Dies ist die Vorbereitung für das Aufbringen der Elektrolytschichten. Durch die Schablonen wird verhindert, dass Elektrolytmaterial auf die entsprechende Folienbahn auch in unerwünschten Bereichen neben den maßgeblichen Flächenbereichen mit der Folienbahn in Kontakt gelangt.

In weiterer Ausgestaltung der Erfindung werden auf der als Trägerlage dienenden Pollage auf die freigelegten Flächenbereiche die Elektrolytschichten für diese Pollage aufgetragen. Auf die Elektrolytschichten der Trägerlage werden anschließend Membranzuschnitte der Membrantrennlage aufgebracht. Auf die auf die Elektrolytschichten aufgebrachten Membranzuschnitte werden anschließend die Elektrolytschichten der anderen Pollage aufgetragen. Die Membranzuschnitte wirken als semipermeable Membranen, um im Betrieb der Energieversorgungseinheit den Elektronenfluss von der Pluspollage zur Minuspollage, d.h. von der Anodenlage zur Kathodenlage, zu ermöglichen.

In weiterer Ausgestaltung der Erfindung wird auf die Trägerlage die mit der zugeordneten Schablonenbahn versehene Decklage kontinuierlich aufgelegt und mit der Trägerlage stoffschlüssig verbunden. Das Aufbringen der Decklage erfolgt nach dem Aufbringen der Elektrolytschichten und der Membrantrennlage, sodass mit dem Aufbringen der Decklage die Endprodukte in Bahnform fertiggestellt sind.

Für die Vorrichtung wird die der Erfindung zugrundeliegende Aufgabe dadurch gelöst, dass zwei Abrolleinrichtungen für Folienbahnen mit unterschiedlichen Pollagen elektrochemisch wirksame Energieversorgungseinheiten vorgesehen sind, dass jeder Abrolleinrichtung Mittel zum kontinuierlichen Zuführen und Verbinden jeweils einer Schablonenlage mit der Folienbahn jeder Pollage und Mittel zum Heraustrennen von Flächenabschnitten aus jeder Schablonenlage auf Höhe von für den Aufbau der elektrochemisch wirksamen Energieversorgungseinheiten maßgeblichen Flächenbereichen auf jeder Folienbahn zugeordnet sind, und dass Mittel zum flächigen Verbinden der Schablonenlage mit der jeweiligen Folienbahn vorgesehen sind. Als Mittel zum Heraustrennen von Flächenabschnitten aus jeder Schablonenlage sind vorzugsweise Stanzmittel vorgesehen, die lediglich die Schablonenlage durchtrennen, ohne die darunter liegende Folienbahn zu beschädigen. Die Abrolleinrichtungen sind angetrieben, wobei die Vortriebsbewegungen der Folienbahnen auf die durchzuführenden Prozesse abgestimmt sind.

In weiterer Ausgestaltung der Erfindung sind zwei Elektrolytauftragsstationen vorgesehen, die - in Laufrichtung wenigstens einer Folienbahn betrachtet - in Abstand hintereinander einem Bahnverlauf der Folienbahn zugeordnet sind. Vorzugsweise werden die Elektrolytschichten streifen- oder raupenförmig als Gelschichten aufgetragen.

In weiterer Ausgestaltung der Erfindung sind eine Abrolleinrichtung zum Aufnehmen und Abwickeln einer bahnförmigen Membrantrennlage sowie Zuführmittel zum Aufbringen der Membrantrennlage auf die wenigstens eine Folienbahn vorgesehen. In weiterer Ausgestaltung sind der Membrantrennlage Stanzmittel zum Abtrennen einer Stanzabfallgitterbahn sowie Mittel zum Abführen der Stanzabfallgitterbahn und Mittel zum Aufbringen der verbleibenden Membranzuschnitte auf wenigstens eine Elektrolytschicht der wenigstens einen Folienbahn zugeordnet, wobei die Mittel zum Aufbringen der verbleibenden Membranzuschnitte räumlich zwischen den beiden Elektrolytauftragsstationen positioniert sind.

In weiterer Ausgestaltung der Erfindung sind Mittel zum Zusammenführen und Verbinden der beiden Folienbahnen vorgesehen. Hierzu sind insbesondere Presswalzen, Pressstempel oder ähnliche Druckeinrichtungen vorgesehen.

In weiterer Ausgestaltung der Erfindung sind Mittel zum Funktionsüberwachen elektronischer Komponenten der Folienbauteile vorgesehen. Die Funktionsüberwachung erfolgt vorzugsweise in Form von Lesegeräten und ist sowohl für aktive als auch für passive Elektronikkomponenten einsetzbar. Bei aktiven Elektronikkomponenten werden die entsprechenden Folienbauteile vorzugsweise in einen "Schlafzustand" versetzt, um zu verhindern, dass die Energieversorgungseinheiten, d. h. die Papier- oder Folienbatterien, sich bereits vor der eigentlichen Inbetriebnahme entladen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer perspektivischen Explosionsdarstellung ein mehrschichtig aufgebautes, elektrisch/elektronisches Folienbauteil,
- Fig. 2: schematisch eine Vorrichtung zur kontinuierlichen Herstellung einer Vielzahl von Folienbauteilen gemäß Figur 1,
- Fig. 3: in vergrößerter, schematischer Darstellung einen Verfahrensabschnitt für die Herstellung der Folienbauteile auf der Vorrichtung gemäß Fig. 2,
- Fig. 4: einen weiteren Verfahrensabschnitt für die Vorrichtung nach Fig. 2,
- Fig. 5: einen weiteren Verfahrensabschnitt der Vorrichtung nach Fig. 2,
- Fig. 6: einen weiteren Verfahrensabschnitt zur Herstellung der Folienbauteile auf der Vorrichtung nach Fig. 2 zur Erzielung der fertiggestellten Endprodukte und
- Fig. 7: schematisch eine weitere Ausführungsform einer Vorrichtung zur Herstellung von elektrischen Folienbauteilen, wobei hier als Folienbauteile ausschließlich elektrische Energieversorgungseinheiten in Form von Papier- oder Folienbatterien vorgesehen sind.

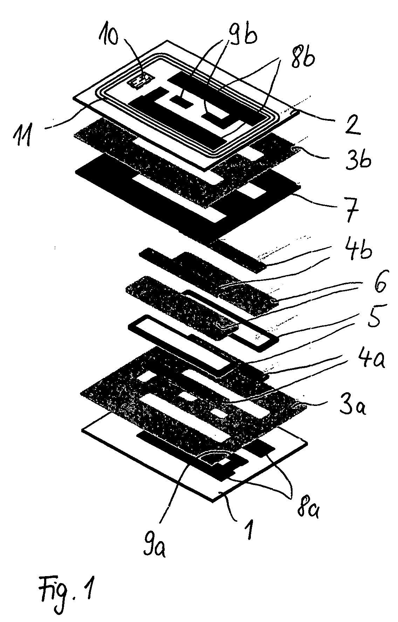

Ein Verfahren und eine Vorrichtung, wie sie anhand der Fig. 1 bis 6 beschrieben sind, dienen zur Herstellung aktiver Transponderlaminate, die Folienbauteile im Sinne der Erfindung darstellen und als Energieversorgungseinheiten flexible, dünne Batterien aufweisen. Erfindungswesentlich ist es insbesondere, Verfahren und Vorrichtung im Hinblick auf die Herstellung und den Aufbau der flexiblen, dünnen Batterien zu offenbaren. Die dünnen, flexiblen Batterien, die auch als Papier- oder Folienbatterien bezeichnet werden, werden im Rolle/Rolle-Verfahren endlos hergestellt und können für den späteren Bedarf vereinzelt werden. Aktive Transponderlaminate im Sinne der Erfindung weisen sowohl eine integrierte Batterie als auch Sensor- oder Timer-Funktionen auf. Alternativ können derartige aktive Folienbauteile neben einer integrierten Batterie auch aktive Sender, Sensoren, Timer und andere aktive elektronische Elemente aufweisen. Derartige Bauteile dienen unter anderem zur Datenerfassung und -auswertung. Sie können auch vollkommen autonome Systeme bilden, die insbesondere eine Datenerfassung und/oder elektrische oder elektronische Aktivität über einen sehr langen Zeitraum aufweisen.

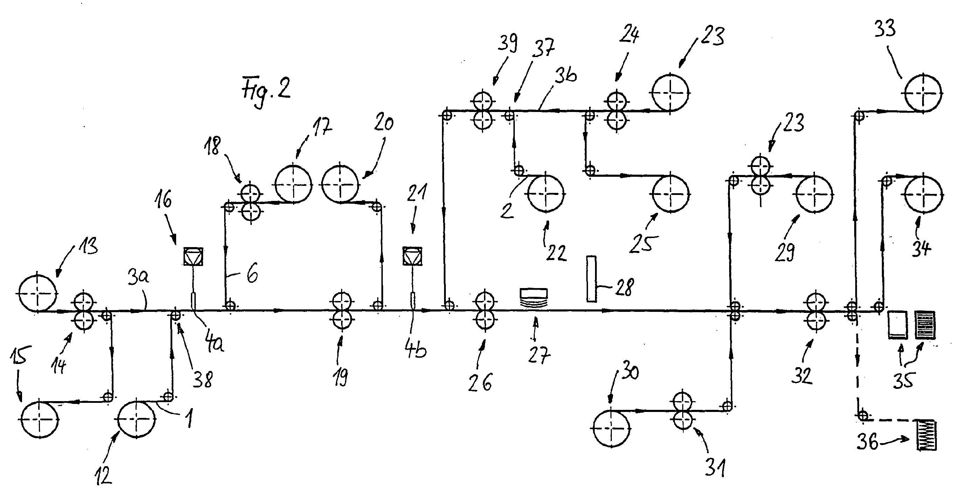

Beim dargestellten Ausführungsbeispiel weist jeder aktive Transponder gemäß Fig. 1, wie er mittels der Vorrichtung nach Fig. 2 hergestellt wird, ein elektronisches Chipbauteil 10 auf, das neben einem Temperatursensor einen Datenspeicher und einen elektronischen Prozessor aufweist. Je nach Programmierung des Chipbauteiles ist es insbesondere möglich, den Transponder auf Verpackung für Gefriergut aufzubringen und so während der Transportkette des Gefriergutes Temperaturschwankungen zu erfassen, wobei insbesondere obere und untere Grenzwerte für entsprechende Solltemperaturen vorgegeben werden können, die nicht über- oder unterschritten werden dürfen. Zur Kommunikation mit entsprechenden Lesegeräten ist dem Chipbauteil 10 eine Antenne 11 zugeordnet. Um das Chipbauteil 10 mit Energie zu versorgen, weist der Transponder zudem eine flexible, dünne Energieversorgungseinheit in Form einer Papier- oder Folienbatterie auf, die gemeinsam mit dem Laminat hergestellt wird.

Um derartige Transponder kontinuierlich in großen Stückzahlen herstellen zu können, werden die Transponder in mehreren Lagen oder Schichten auf kontinuierlich geförderten Folienbahnen aufgebaut. Das Transponderlaminat wird in zwei unterschiedlichen Lagen aufgebaut, die durch die unterschiedlichen Pollagen der Batterie definiert sind und die gegen Ende der Produktherstellungslinie zusammengeführt werden. Sowohl die als negative Pollage dienende Kathodenbahn 2 als auch die als positive Pollage dienende Anodenbahn 1 weisen als Trägerfolie jeweils eine Kunststofffolie, vorliegend eine Polyesterfolie, auf, die jeweils metallbeschichtet, vorzugsweise kupferbeschichtet ist. Mittels nicht dargestellter Verfahrensvorgänge wird bei der Kathodenbahn 2 aus der Kupferschicht die Antenne 11 herausgeätzt. Zudem werden bei beiden Polbahnen 1, 2 die später benötigten elektrischen Anschlüsse für die Energieversorgungseinheit sowie die entsprechenden Leitungsadern für das anschließend aufzubringende Chipbauteil 10 herausgeätzt. Die entsprechenden Chipbauteile 10 werden aufgebracht. Zudem werden passive und aktive Schichten wie Graphitschichten oder Aktivschichten miteingebundenen Elektronen, insbesondere Mangan- und Zink/Kohle-Schichten, in nicht näher dargestellter Weise im Siebdruckverfahren auf die kupferbeschichteten und geätzten Kunststofffolienbahnen aufgebracht. Die so bereits vorbeschichteten Folienbahnen werden nun der Vorrichtung gemäß Fig. 2 zugeführt, wobei die Anodenbahn 1 eine Trägerbahn und die Kathodenbahn 2 eine Decklage der Transponderlaminate bildet. Sowohl die Anodenbahn 1 als auch die Kathodenbahn 2 werden auf eine Rolle aufgewickelt und in aufgerolltem Zustand jeweils einer Abrolleinrichtung 12 bzw. 22 der Vorrichtung gemäß Fig. 2 zugeführt. Um die elektrochemisch wirksame Energieversorgungseinheit vollständig und funktionsfähig aufzubauen, werden in nachfolgend näher beschriebener Weise zwischen die vorgefertigten Anoden- und Kathodenbahnen auf Höhe der für die spätere Batteriefunktion maßgeblichen Flächenbereiche zunächst Elektrolytschichten aufgebracht, die streifenförmig in Gelform aufgebracht werden. Dabei ist jeweils eine Elektrolytschicht der Anodenseite und die andere Elektrolytschicht der Kathodenseite zugeordnet. Zur Separierung der Elektrolytschicht zwischen Anoden- und Kathodenseite ist eine Trennlage in Form einer semipermeablen Membran vorgesehen, die den Elektronenfluss in die gewünschte Richtung ermöglicht, um die Batteriefunktion zu gewährleisten.

Die nachfolgend beschriebene Vorrichtung stellt sicher, dass zum einen eine feste und dauerhafte Verbindung der verschiedenen Lagen und Schichten miteinander erfolgt. Zudem wird die Flexibilität des Transponderlaminates erhalten. Schließlich wird sichergestellt, dass trotz der kontinuierlichen Herstellung ein Aufbringen der entsprechenden Schichten nur in den jeweils maßgeblichen Flächenbereichen erfolgt. Insbesondere soll verhindert werden, dass die Elektrolytschicht oder die Trennlage so ungenau aufgebracht werden, dass entweder die Batteriefunktion in Frage gestellt ist oder die übrigen Funktionen des Transponders beeinträchtigt werden.

Ein Transponderlaminat gemäß Fig. 1 weist folgenden Aufbau auf: Als Trägerlage dient die Anodenbahn 1, auf die eine Schablone 3a aufgebracht wird, die die Bereiche der Anodenbahn 1 abdeckt, die nicht mit Elektrolytgel 4a beaufschlagt werden sollen und die nicht mit der gegenüberliegenden Kathodenbahn 2 kontaktiert werden müssen. Anschließend wird auf die ausgesparten Bereiche auf Höhe der elektrochemisch aktiven Flächenbereiche 8a der Anodenbahn 1 Elektrolytgel 4a in Streifen- oder Raupenform aufgebracht. Auf diese Elektrolytschicht wird eine Trennlage 6 aufgebracht, die eine semipermeable Membran, insbesondere mit der Saugfunktion nach Art eines Löschpapieres, darstellt. Diese wird in Bahnform aufgebracht und um die Elektrolytgelbereiche herum mit einem Leimrahmen 5 versehen, sodass die Trennlage um den jeweiligen Elektrolytgelauftrag herum mit der Schablonenlage verklebt ist. Die Schablonenlage 3a selbst ist selbstklebend ausgeführt und auf die Anodenbahn 1 flächig aufgeklebt. Die über die verklebten und für die elektrochemische Batteriefunktion wirksamen Zuschnittbereiche der Trennlage 6 hinausgehenden Bereiche werden als Gitterbahn ausgestanzt und von der Anodenbahn 1 entfernt. Vorteilhaft saugt diese als Gitterabfall dienende Gitterbahn Elektrolytgelreste, die über die ausgesparten Flächenbereiche auf die Schablonenlage 3a aufgebracht waren, mit auf und zieht sie mit ab. Auf die ausgestanzten Trennlagenbereiche wird nun die zweite Elektrolytgelschicht 4b aufgebracht. Mittels einer weiteren Leimrahmenschicht 7 wird dann die Kathodenbahn 2 als Decklage auf die Anodenbahn 1 aufgebracht, wobei der Kathodenbahn 2 zuvor ebenfalls eine Schablonenlage 3b zugeführt worden war, die selbstklebend ausgeführt ist und mit der Kathodenbahn 2 flächig verklebt wird. Die Schablonenlage 3b verklebt sich somit durch die Leimrahmenschicht 7 flächig mit der Schablonenlage 3a der Anodenbahn 1, sobald diese zusammengeführt werden. Das Transponderlaminat ist somit funktionsfähig fertiggestellt. Als Schutz wird später noch eine Bodenlage und eine Decklage in Form jeweils einer selbstklebenden, flexiblen Folie aufgebracht.

Anschließend wird die fertiggestellte Transponderlaminatbahn entweder auf eine Rolle aufgewickelt oder in anderer Art und Weise kompakt abgelegt oder bereits zu den verschiedenen Folienbauteilen vereinzelt.

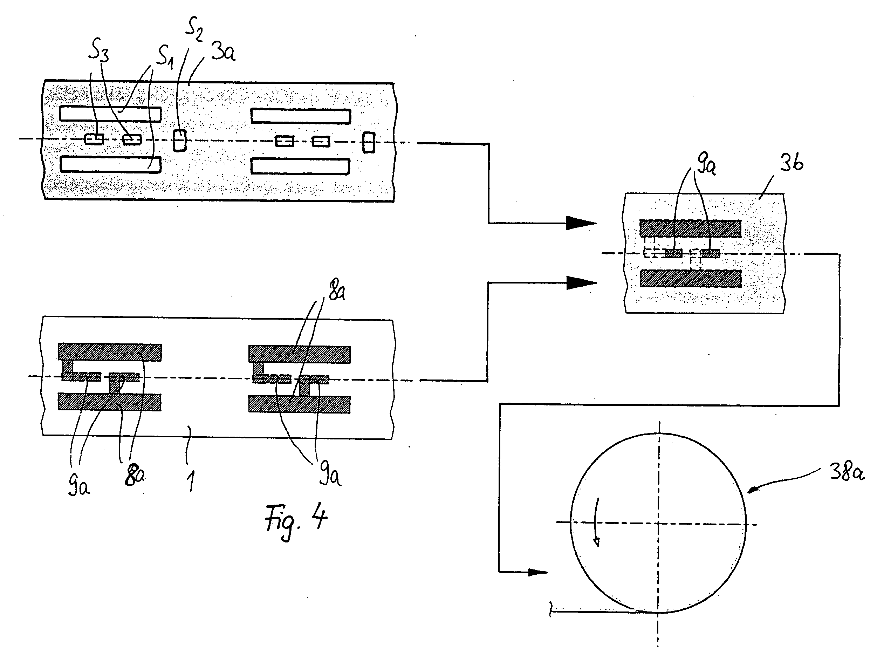

Um die Anodenbahn 1, die auf der Abrolleinrichtung 12 aufgewickelt ist, mit der Schablonenlage 3a zu versehen, ist gemäß Fig. 2 und 4 auch die Schablonenlage 3a als selbstklebende Folienbahn auf einer Abrolleinrichtung 13 endlos aufgewickelt gespeichert. Eine Stanzeinrichtung 14 stanzt kontinuierlich im Rollenstanzverfahren die freizulegenden Flächenbereiche der Schablonenlage 3a aus. Eine Trägerfolie wird zusammen mit den Stanzresten von der Schablonenlage abgezogen und rollt diese auf eine Aufrolleinrichtung 15 auf. Die vorgestanzte Schablonenlage 3a weist jetzt eine freigelegte Klebeschicht auf, die im Bereich der Umlenkeinrichtung 38 flächig mit der Anodenbahn 1 verklebt wird, wobei die freigelegten Flächenbereiche S₁ bis S₃ der Schablonenlage 3a derart auf entsprechenden Schichtflächen 8a oder Anschlussflächen 9a der Anodenbahn 1 positioniert werden, dass diese freigelegt bleiben und die übrige Anodenbahn 1 durch die Schablonenlage 3 überdeckt ist.

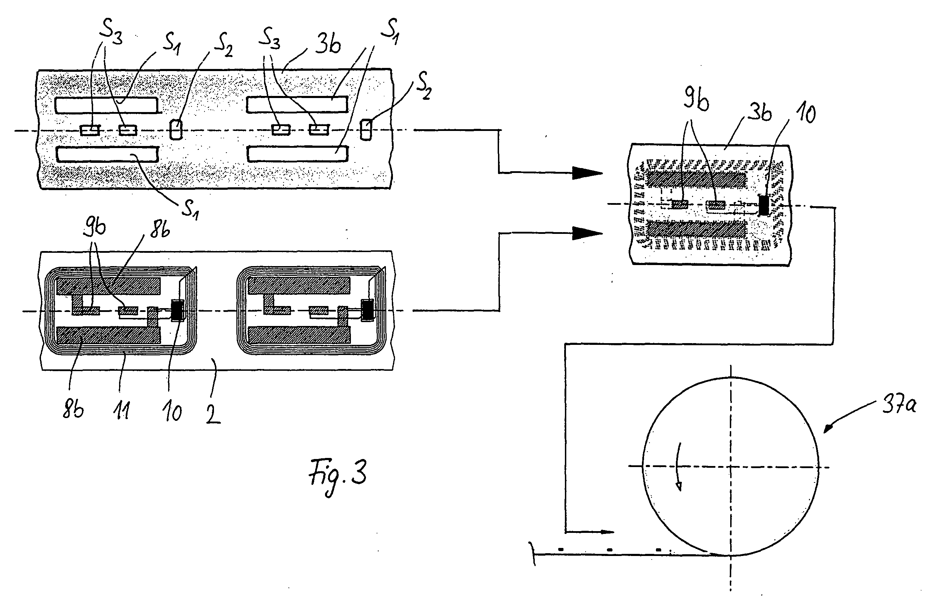

In gleicher Weise wird gemäß Fig. 2 und 3 auch die Kathodenbahn 2, die mit Schichtflächen 8a und Anschlussflächen 9b sowie mit dem Chipbauteil 10 versehen ist, mit einer Schablonenlage 3b versehen, die ausgestanzte Flächenbereiche S₁ bis S₃ für die Aussparung der Schichtflächen 8b, der Anschlussflächen 9b und des Chipbauteils 10 aufweist. Die Kathodenbahn 2 ist in Rollenform auf der Abrolleinrichtung 22 vorgehalten. Die Schablonenlage 3b ist auf der Abrolleinrichtung 23 ebenfalls in aufgerollter Form positioniert. Eine Stanzeinrichtung 24 dient dazu, die freizulegenden Flächenbereiche aus der Schablonenlage 3b herauszustanzen. Unmittelbar anschließend an die Stanzeinrichtung 24 wird eine Trägerfolie der Schablonenlage einschließlich der Stanzreste abgeführt und auf eine Rolle 25 aufgewickelt. Die durch das Entfernen der Trägerfolie nunmehr selbstklebende Schablonenlage 3b wird mit der Kathodenbahn 2 im Bereich der Umlenkeinrichtung 37 zusammengeführt.

Anhand der Fig. 3 und 4 ist jeweils eine Aufwickeleinrichtung 37a bzw. 38a für das durch das Zusammenführen der Schablonenlage 3a, 3b und der jeweiligen Polbahn 1, 2 erzielte Vorprodukt dargestellt. Die Darstellung in den Fig. 3 und 4 ist schematisch zu verstehen, da dieses erste Vorprodukt gemäß nicht dargestellten Ausführungsformen der Erfindung auch in Rollenform zunächst abgespeichert und für den anschließenden weiteren Prozeß einer entsprechend weiterführenden Anlage zugeführt werden kann. Beim Ausführungsbeispiel gemäß Fig. 2 erfolgt jedoch kein Aufwickeln des jeweiligen Vorproduktes, sondern eine direkte Weiterverarbeitung, wie nachfolgend beschrieben.

An einer Gelauftragsstation 16 wird auf die mit der Schablonenlage 3a versehene Anodenbahn 1 die entsprechende Gelauftragsschicht 4a auf die freigelegten Flächenbereiche der Schablonenlage 3a aufgebracht.

Anschließend wird die ebenfalls in Rollenform auf einer Abrolleinrichtung 17 vorgegebene Trennlage zugeführt, die zuvor in einer Leimauftragsstation 18 mit dem zuvor beschriebenen Leimrahmen versehen wird. Die Trennlage 6 wird auf die Vorproduktbahn der Anodenbahn 1 aufgebracht und mit dieser mitgeführt. Beide durchlaufen eine Stanzeinrichtung 19, in der zum einen rahmenförmig die Flächenbereiche der Trennlage um die jeweilige Elektrolytauftragsschicht herum, die mit dem Leimrahmen versehen sind, auf die Schablonenlage 3a aufgepresst werden. Zum anderen wird ausserhalb dieses Leimrahmens die Trennlage freigeschnitten, sodaß ein bahnförmiges Trennlagengitter als Abfall verbleibt, das nach oben abgeführt und auf eine Aufrolleinrichtung 20 aufgerollt wird. Da die Trennlage aufgrund ihrer Membranfunktion aufsaugende Wirkung hat, werden Elektrolytgelreste, die über die benötigten Flächenbereiche ausgetreten und auf der Schablonenlage angehaftet sind, von dem Trennlagengitter aufgesaugt und gemeinsam mit dem Trennlagengitter zur Aufrolleinrichtung 20 abgeführt.

Anschließend wird auf die auf der Trägerbahn verbliebenen Trennlagenbereiche die zweite Elektrolytgelauftragsschicht im Bereich der Elektrolytauftragsstation 21 aufgebracht.

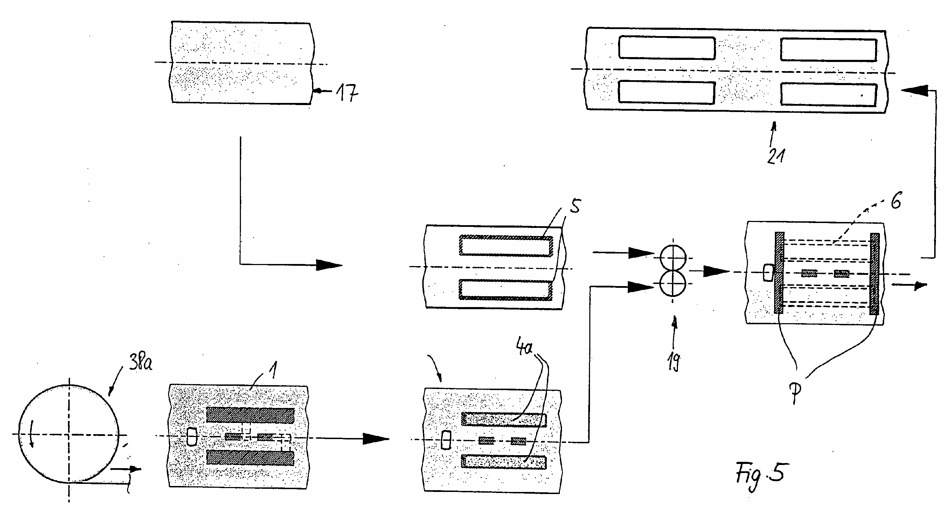

Die zuvor beschriebenen Verfahrensschritte sind anhand der Fig. 5 noch einmal erläutert. Dort ist die ungestanzte Trennlage mit dem Bezugszeichen 17 versehen. Die Leimauftragsrahmen sind mit dem Bezugszeichen 5 versehen. In den skizzierten Flächenbereichen P erfolgt das Andrücken der Trennlagenbereiche 6, wodurch auch die Verklebung der Leimauftragsrahmen 5 der Trennlagenbereiche mit der Trägerbahn, d. h. der entsprechenden Schablonenlage 3a, erfolgt. Anschließend wird das Trennlagengitter abgezogen, das mit dem Bezugszeichen 21 versehen ist.

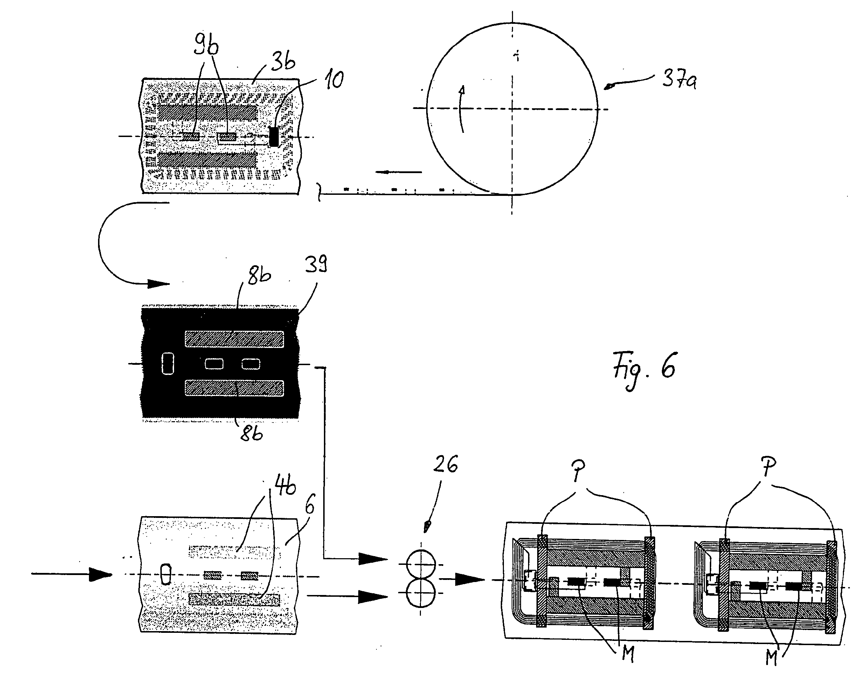

Anhand der Fig. 2 und 6 ist erkennbar, wie die Trägerbahn und die Deckbahn, das heißt die Anodenbahn 1 und die Kathodenbahn 2 zusammengeführt werden. Auf die Trägerbahn wird - wie beschrieben - der zweite Elektrolytgelauftrag 4b aufgebracht. Das bahnförmige Vorprodukt aus der Kathodenbahn 2 und der aufgebrachten Schablonenlage 3b wird durch eine Leimauftragsstation 39 hindurch gefördert, in der ein Leimrahmen 7 (in Fig. 6 mit dem Bezugszeichen 39 versehen) so aufgebracht wird, dass die für die Batteriefunktion maßgeblichen Flächenbereiche 8b,die Anschlussflächenbereiche 9b und das Chipbauteil 10 frei von Leim bleiben. Nun werden die mit dem Leimrahmen versehene Deckbahn und die Trägerbahn in Form der Anodenbahn im Bereich einer Preß- und Kontaktierstation 26 zusammengeführt und miteinander verklebt. Entsprechende Anpressbereiche auf Höhe dieser Preß- und Kontaktierstation 26 sind in Fig. 6 mit dem Bezugszeichen P versehen. Zudem erfolgt eine mechanische Kontaktierung auf Höhe der Flächenbereiche M zwischen den Anschlussflächen 9a der Anodenbahn 1 und den Anschlussflächen 9b der Kathodenbahn 2. Beim dargestellten Ausführungsbeispiel wird die mechanische Kontaktierung durch eine Crimpung vorgenommen, die die kupferbeschichteten Flächenbereiche der Anodenbahn 1 und der Kathodenbahn 2 mechanisch miteinander verkrallt. Auch die mechanische Kontaktierung erfolgt kontinuierlich durch entsprechende Werkzeuge, die am Außenumfang der Walzen der Preß- und Kontaktierstation 26 vorgesehen sind. Das nunmehr funktionsfertig hergestellte, bahnförmige Transponderlaminatprodukt durchläuft ein Lesegerät 27. Dort wird zum einen die Funktionsfähigkeit der einzelnen Transponder getestet. Zum anderen werden die Transponder in einen passiven, energiesparenden Zustand versetzt, um zu gewährleisten, dass die Transponder bei der späteren Inbetriebnahme voll funktionsfähig sind, ohne bereits einen Teil ihrer Leistungsfähigkeit eingebüßt zu haben. Anschließend durchläuft die Transponderlaminatbahn eine Beschriftungsstation 28, um eine klare Identifizierung der Transponder zu ermöglichen. Schließlich werden eine obere und eine untere Schutzbahn aufgebracht, die auf jeweils einer Abrolleinrichtung 29, 30 vorgehalten sind. Die beiden Schutzbahnen werden an jeweils einer Leimauftragsstation 23, 31 auf ihrer der Transponderlaminatbahn zugewandten Seite mit einer Klebstoffschicht versehen, sodass diese oben und unten mit der Transponderlaminatbahn flächig verbunden werden und so eine Schutzhülle für die Transponderlaminatbahn bilden. Anschließend werden die Endprodukte entweder mittels einer Stanzeinrichtung 32 vereinzelt und in entsprechende Speicherbehältnisse 35 kompakt abgelegt. Alternativ ist es möglich, anstelle der Stanzeinrichtung 32 eine Falzeinrichtung vorzusehen und die Transponderlaminatbahn zwischen jeweils benachbarten Transpondern zu falzen und leporelloartig in einem Speicherbehältnis 36 abzulegen. Schließlich ist es auch möglich, auf eine Stanz- oder Falzeinrichtung zu verzichten und die Transponderlaminatbahn endlos auf eine Rolle 33 aufzuwickeln. Die Vereinzelung kann dann in einer anderen Station erfolgen, die hier nicht dargestellt ist.

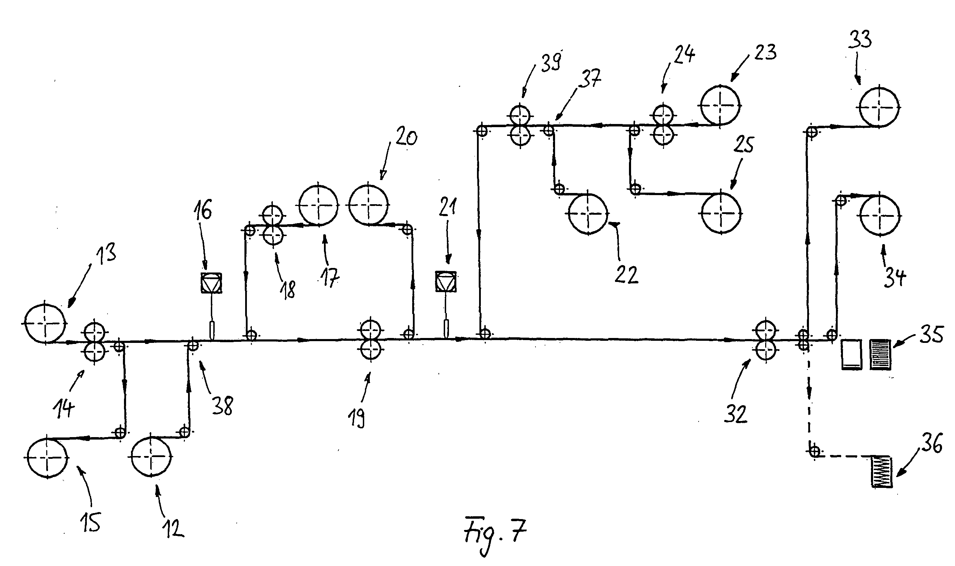

Bei der Ausführungsform gemäß Fig. 7 wird in kontinuierlichen Verfahren eine Vielzahl von flexiblen, dünnen Batterien, d. h. elektrischer Energieversorgungseinheiten, hergestellt, ohne dass diese zusätzliche elektrische oder elektronische Funktionen haben. Der grundsätzliche Aufbau derartiger elektrochemisch wirksamer Energieversorgungseinheiten entspricht den zuvor anhand der Fig. 1 bis 6 beschriebenen Energieversorgungseinheiten. Grundsätzlich entspricht der Aufbau den übrigen Papier- oder Folienbatterien, wie sie in der EP 1 009 476 A1 beschrieben sind. Wesentlicher Unterschied bei der hier vorliegenden Lösung ist es, dass die Elektrolytschichten in Gelform aufgetragen werden. Der Aufbau der Vorrichtung zur Herstellung der Energieversorgungseinheit entspricht daher im wesentlichen dem Aufbau der Vorrichtung gemäß Fig. 2. Einziger Unterschied ist es, dass mangels des Vorhandenseins elektrischer oder elektronischer Bauteile ein Lesegerät oder eine entsprechende Beschriftung entfallen. Zudem ist auch keine Umhüllung mittels einer Schutzdeckenlage und einer Schutzträgerlage notwendig. Im übrigen kann für die Herstellung der Energieversorgungseinheiten auf die Ausführungen zu Fig. 2 verwiesen werden. Die Herstellung ist insoweit identisch.

## Patentansprüche

1. Verfahren zur kontinuierlichen Herstellung elektrischer und/oder elektronischer Folienbauteile, die in wenigstens einer Reihe hintereinander auf wenigstens einer endlosen Folienbahn aufgebaut werden, **dadurch gekennzeichnet, dass** auf der wenigstens einen Folienbahn (1,2) in mehreren Verfahrensabschnitten elektrische Anschlußflächen und aktive sowie inaktive Schichten zur Bildung von elektrochemisch wirksamen Energieversorgungseinheiten aufgebaut werden.

2. Verfahren nach Anspruch 1, **dadurch gekennzeichnet, dass** jede Energieversorgungseinheit mit einem elektrischen oder elektronischen Verbraucher (10) verbunden wird.

3. Verfahren nach Anspruch 2, **dadurch gekennzeichnet, dass** auf die Folienbahn (2) Transponderelemente (11) und/oder elektronische Chipbauteile (10) aufgebracht werden, die mit den Energieversorgungseinheiten verbunden werden.

4. Verfahren nach Anspruch 1, **dadurch gekennzeichnet, dass** für unterschiedliche Pollagen der Energieversorgungseinheiten getrennte Folienbahnen vorgesehen werden, die nach der Aufbringung elektrischer Anschlussflächen und aktiver oder inaktiver Schichten als Träger- und Decklagen zusammengeführt und kontinuierlich miteinander verbunden werden.

5. Verfahren nach Anspruch 4, **dadurch gekennzeichnet, dass** jeder Pollage pro Folienbauteil wenigstens eine Elektrolytschicht (4a, 4b) zugeordnet wird, wobei zwischen die Elektrolytschichten (4a, 4b) beider Pollagen (1, 2) eine Membrantrennlage (6) eingefügt wird.

6. Verfahren nach Anspruch 5, **dadurch gekennzeichnet, dass** die Elektrolytschichten jeder Energieversorgungseinheit als Gelraupen aufgebracht werden.

7. Verfahren nach Anspruch 4, **dadurch gekennzeichnet, dass** elektrische Anschlussflächen (9a, 9b) der Träger- und Decklagen (1, 2) mechanisch miteinander verbunden werden.

8. Verfahren nach Anspruch 1, **dadurch gekennzeichnet, dass** die hintereinander auf der Folienbahn aufgebauten Folienbauteile vereinzelt und gestapelt werden.

9. Verfahren nach Anspruch 1, **dadurch gekennzeichnet, dass** die mit den fertig aufgebauten Folienbauteilen versehene Folienbahn zu einer Rolle aufgewickelt wird.

10. Verfahren nach Anspruch 1, **dadurch gekennzeichnet, dass** die mit den fertig aufgebauten Folienbauteilen versehene Folienbahn zwischen benachbarten Folienbauteilen jeweils gefalzt und leporelloartig abgelegt wird.

11. Verfahren nach Anspruch 4, **dadurch gekennzeichnet, dass** die Folienbahn (1, 2) jeder Pollage mit elektrisch aktiven Schichten versehen wird, dass anschließend eine Schablonenbahn (3a, 3b) mit jeder Folienbahn (1, 2) verbunden wird, die die Folienbahn bis auf die für den Aufbau der elektrochemisch wirksamen Energieversorgungseinheiten maßgeblichen Flächenbereiche abdeckt.

12. Verfahren nach Anspruch 11, **dadurch gekennzeichnet, dass** auf der als Trägerlage dienenden Pollage (1) die Elektrolytschicht (4a) für diese Pollage auf die freigelegten Flächenbereiche aufgetragen wird.

13. Verfahren nach Anspruch 12, **dadurch gekennzeichnet, dass** auf die Elektrolytschicht (4a) der Trägerlage (1) Trennlagenzuschnitte der Membrantrennlage (6) aufgebracht wird.

14. Verfahren nach Anspruch 13, **dadurch gekennzeichnet, dass** auf die Elektrolytschicht (4a) aufgebrachte Trennlagenzuschnitte eine Elektrolytschicht (4b) der anderen Pollage (2) aufgetragen wird.

15. Verfahren nach Anspruch 14, **dadurch gekennzeichnet, dass** auf die Trägerlage (1) die mit der zugeordneten Schablonenbahn (3b) versehene Decklage (2) kontinuierlich aufgelegt und mit dieser stoffschlüssig verbunden wird.

16. Vorrichtung zur kontinuierlichen Herstellung von elektrischen und /oder elektronischen Folienbauteilen mit wenigstens einer Abrolleinrichtung zum Aufnehmen und Abwickeln einer flexiblen Folienbahn, **dadurch gekennzeichnet, dass** zwei Abrolleinrichtungen (12, 22) für Folienbahnen (1, 2) mit unterschiedlichen Pollagen elektrochemisch wirksamer Energieversorgungseinheiten vorgesehen sind, dass jeder Abrolleinrichtung Mittel (13, 15; 23, 25) zum kontinuierlichen Zuführen und Verbinden jeweils einer Schablonenlage (3a, 3b) mit der Folienbahn (1, 2) jeder Pollage und Mittel (14, 24) zum Heraustrennen von Flächenabschnitten aus jeder Schablonenlage auf Höhe von für den Aufbau der elektrochemisch wirksamen Energieversorgungseinheit maßgeblichen Flächenbereichen auf jeder Folienbahn zugeordnet sind, und dass Mittel zum flächigen Verbinden der Schablonenlage mit der jeweiligen Folienbahn vorgesehen sind.

17. Vorrichtung nach Anspruch 16, **dadurch gekennzeichnet, dass** zwei Elektrolytauftragsstationen (16, 21) vorgesehen sind, die - in Laufrichtung wenigstens einer Folienbahn gesehen - in Abstand hintereinander einem Bahnverlauf der Folienbahn zugeordnet sind.

18. Vorrichtung nach Anspruch 16, **dadurch gekennzeichnet, dass** eine Abrolleinrichtung (17) zum Aufnehmen und Abwickeln einer bahnförmigen Membrantrennlage sowie Zuführmittel zum Aufbringen der Membrantrennlage auf die wenigstens eine Folienbahn vorgesehen sind.

19. Vorrichtung nach Anspruch 18, **dadurch gekennzeichnet, dass** der Membrantrennlage Stanzmittel (19) zum Abtrennen einer Stanzabfallgitterbahn sowie Mittel zum Aufbringen der verbleibenden Membranzuschnitte auf wenigstens eine Elektrolytschicht der wenigstens einen Folienbahn zugeordnet sind, wobei die Mittel zum Aufbringen der verbleibenden Membranzuschnitte räumlich zwischen den beiden Elektrolytauftragsstationen positioniert sind.

20. Vorrichtung nach Anspruch 16, **dadurch gekennzeichnet, dass** Mittel (26) zum Zusammenführen und Verbinden der beiden Folienbahnen (1, 2) vorgesehen sind.

21. Vorrichtung nach Anspruch 20, **dadurch gekennzeichnet, dass** Mittel zum Vereinzeln der fertiggestellten Folienbauteile vorgesehen sind.

22. Vorrichtung nach Anspruch 16, **dadurch gekennzeichnet, dass** Mittel (27) zum Funktionsüberwachen elektronischer Komponenten der Folienbauteile vorgesehen sind.
